**Europäisches Patentamt**

**European Patent Office**

**Office européen des brevets**

(11) Veröffentlichungsnummer: **0 323 571 B1**

(12) **EUROPÄISCHE PATENTSCHRIFT**

(45) Veröffentlichungstag der Patentschrift: **08.07.92**

(21) Anmeldenummer: **88119921.0**

(22) Anmeldetag: **30.11.88**

(51) Int. Cl.⁵: **D04H 3/02**, D04H 5/08, B32B 5/08

(54) **Faserverstärktes, thermoplastisches Halbzeug.**

(30) Priorität: **09.12.87 DE 3741669**

(43) Veröffentlichungstag der Anmeldung:
**12.07.89 Patentblatt 89/28**

(45) Bekanntmachung des Hinweises auf die
Patenterteilung:
**08.07.92 Patentblatt 92/28**

(84) Benannte Vertragsstaaten:
**CH DE ES FR GB IT LI NL**

(56) Entgegenhaltungen:
**EP-A- 0 200 385**
**EP-A- 0 203 803**
**US-A- 4 532 169**

(73) Patentinhaber: **BASF Aktiengesellschaft**
**Carl-Bosch-Strasse 38**
**W-6700 Ludwigshafen(DE)**

(72) Erfinder: **Wahl, Ludwig**
**Edith-Stein-Strasse 14**
**W-6707 Schifferstadt(DE)**
Erfinder: **Vogel, Helmut**
**Helmkaemper-Ort 18**
**W-4550 Bramsche 8(DE)**

Rank Xerox (UK) Business Services

## Beschreibung

Die Erfindung betrifft ein faserverstärktes, thermoplastisch verformbares Halbzeug aus einem thermoplastischen Polymeren und einem durch Nadelung fixierten textilen Flächengebilde.

In der DE-A 35 35 272 ist die Verwendung genadelter Gewebe oder Gelege als textile Flächengebilde für die Herstellung von thermoplastisch verformbarem Halbzeug beschrieben. Durch die Nadelung wird die Durchtränkung der eng aneinander anliegenden unidirektional orientierten Faserbündeln mit der Thermoplast-Schmelze ermöglicht. In einer besonderen Ausführungsform (Beispiel 2) werden eine Schicht aus einer Wirrfasermatte aus Endlos-Glasfasern mit einem Flächengewicht von 300 g/m$^2$ und eine Schicht aus parallel angeordneten Glasfaserrovings mit einem Flächengewicht von 700 g/m$^2$ durch Nadelung miteinander verbunden und mit einem Thermoplasten getränkt. Die unidirektional orientierten (UD-) Fasern bewirken eine Verstärkung des Halbzeugs bzw. des daraus hergestellten Formteils in der Vorzugsrichtung; der Wirrfaseranteil ermöglicht die Tränkbarkeit mit der Kunststoffschmelze und die Verformbarkeit des Halbzeugs durch Fließpressen.

Es hat sich nun gezeigt, daß insbesondere bei dickerem Halbzeug und hohem Gehalt an UD-Fasern das Durchtränken der UD-Faserschicht mit der Thermoplastschmelze erschwert oder fast unmöglich ist, und daß ein gleichmäßig durchtränktes Halbzeug nicht herstellbar ist:
Üblicherweise werden zwei textile Flächengebilde zwischen drei Schmelzeschichten aus thermoplastischem Harz, die aus einem Extruder über drei Breitschlitzdüsen verteilt werden, einer beheizten Doppelbandpresse zugeführt. Dabei sind zwei Anordnungen der Matten möglich. Legt man die UD-Faserschicht jeweils nach außen, so kann die Matrix der Außenschichten nur schwer bis zur Mitte des Verbundes vordringen. Es entstehen matrixreiche Außenschichten, die bei der Weiterverarbeitung des Halbzeugs zum Fertigteil stark kleben und dadurch das Handling erschweren. Legt man die UD-Faserschicht jeweils nach innen, verdoppelt man die schwer zu durchtränkende UD-Schicht und es verbleibt eine Schmelzebahn in der Mitte des Halbzeugs. Beiden Vorgehensweisen ist gemeinsam, daß beim Verpressen des Halbzeugs noch ungetränkte Faserbündel an der Oberfläche des Fertigteiles austreten. Eine asymmetrische Anordnung der beiden Matten führt zu starker Verwerfung des Halbzeugs.

Der Erfindung lag also die Aufgabe zugrunde, dickere Halbzeuge mit hohem Gehalt an UD-Fasern herzustellen, welche die oben genannten Nachteile nicht aufweisen. Diese Aufgabe wird durch das Halbzeug mit der Anordnung der Faserschichten gemäß Anspruch 1 gelöst.

Für die Herstellung der Halbzeuge sind alle thermoplastisch verarbeitbaren Kunststoffe geeignet, beispielsweise Olefinpolymerisate, wie Polyethylen oder Polypropylen; Styrolpolymerisate, wie Polystyrol oder Copolymere des Styrols sowie kautschukmodifizierte Styrolpolymerisate; Chlor enthaltende Polymerisate, wie Polyvinylchlorid oder chlorierte Polyolefine; Polyamide, Polymethylmethacrylat, Polyester aus Terephthalsäure und gesättigten Diolen, Polycarbonat, Polysulfon, Polyethersulfon, Polyetherketone sowie Mischungen dieser Polymerisate.

Diese Kunststoffe können die üblichen Zusatzstoffe, wie Füllstoffe, Pigmente, Farbstoffe, Antistatika, Stabilisatoren oder Flammschutzmittel enthalten.

Das textile Flächengebilde enthält mindestens zwei Schichten A aus in mindestens einer Vorzugsrichtung orientierten Endlosfasern. Dies können Gelege aus parallelen Fasern (UD-Fasern) sein, die aus einer Vielzahl von Einzelfilamenten bestehen; es können aber auch mehrere Fasern zu Rovings zusammengefaßt sein. Weiterhin sind Gewebe verwendbar, bei denen die Endlosfasern in zwei oder mehr Vorzugsrichtungen orientiert sind. Kettverstärkte Gewebe sind dabei bevorzugt. Wesentlich für eine gute Durchtränkung ist, daß die Schichten A verhältnismäßig dünn sind, d.h. ihr Flächengewicht darf 300 g/m$^2$ nicht übersteigen. Bevorzugt beträgt das Flächengewicht der Schichten A maximal 200 g/m$^2$, insbesondere 150 g/m$^2$.

Das textile Flächengebilde enthält ferner mindestens eine, vorzugsweise mindestens zwei Schichten B aus nicht orientierten Fasern. Dafür sind die üblichen Wirrfaser-Matten oder -Vliese sowie Stapelfasergelege oder -matten geeignet, ferner kann die Schicht B aus unregelmäßig auf der Schicht A abgelegten Schnittfasern oder Endlosfasern bestehen.

Ein gewisser Mindestgehalt an nicht orientierten Fasern in dem textilen Flächengebilde ist erforderlich, da die entsprechenden Schichten Poren und Hohlräume enthalten, in welche die Kunststoffschmelze eindringen kann, und da hierdurch die Fließfähigkeit des Materials beim Verpressen des Halbzeugs zum Fertigteil erhöht wird. Andererseits führt ein hoher Gehalt an orientierten Fasern zu Fertigteilen mit günstigen Festigkeitseigenschaften in Richtung der Faserorientierung. Das Gewichtsverhältnis der Faserschichten A : B in dem textilen Flächengebilde beträgt 80 : 20 bis 40 : 60, vorzugsweise 75 : 25 bis 50 : 50.

Zur Herstellung dieser textilen Flächengebilde werden Glasfasern eingesetzt. Insbesondere bei Fasergelegen werden die steifen Verstärkungsfasern durch Verbindungsfasern mit weicher Schlichte zusammengehalten. Weiterhin ist es möglich,

2

die Fasern auf eine Thermoplastfolie als Träger abzulegen und mit dieser zu vernadeln. Die Filamentdurchmesser liegen zwischen 5 und 30 μm, vorzugsweise zwischen 7 und 20 μm. Üblicherweise sind die Fasern mit einer Schlichte behandelt, die die Haftung zum Thermoplasten verbessert.

Besonders bevorzugt ist ein Schichtaufbau ABAB, aber auch die Strukturen ABABAB und ABABABAB sind günstig. Dabei können die einzelnen Schichten unterschiedliche Flächengewichte aufweisen und aus unterschiedlichen Fasertypen bestehen.

Durch die Nadelung werden die einzelnen Schichten zu dem textilen Flächengebilde verbunden. Außerdem wird das Flächengebilde schubsteif, d.h. die Faserbündel der Schicht A lassen sich nicht mehr verschieben. Die Einzelfilamente der Schichten A werden im wesentlichen nicht beschädigt, sondern lediglich aufgelockert. Dagegen erfolgt in den Schichten B ein geringer Faserbruch, was dazu führt, daß das Halbzeug bei der Verarbeitung durch Pressen eine wenigstens beschränkte Fließfähigkeit aufweist. Das Nadeln erfolgt auf üblichen Nadelmaschinen mit Filznadeln. Die Einstichzahl kann in weiten Grenzen zwischen 10 und 200 Einstichen pro cm$^2$ schwanken, bevorzugt liegt sie zwischen 20 und 100.

Die Herstellung der Halbzeuge erfolgt nach an sich bekannten Verfahren, beispielsweise nach dem in der DE-OS 23 12 816 beschriebenen Verfahren. Eine diskontinuierliche Fertigung in einer hydraulischen Presse ist denkbar. Den textilen Flächengebilden ist dabei so viel Thermoplastschmelze hinzuzufügen, daß ein Fasergehalt zwischen 20 und 60 Gew.%, vorzugsweise 25 bis 50 Gew.%, erreicht wird. Die Halbzeugdicke kann je nach Flächengewicht des genadelten Gewebes oder Geleges zwischen 0,5 und 6 mm, vorzugsweise 2 bis 4 mm, betragen.

Bei einer bevorzugten Ausführungsform zur Herstellung der erfindungsgemäßen Halbzeuge werden zwei textile Flächengebilde zwischen drei aus Extrudern mit Breitschlitzdüsen ausgepreßten Schmelzeschichten zusammengeführt und - wie z.B. in DE-B 29 48 235 beschrieben - miteinander verpreßt, wobei die Schmelze die textilen Flächengebilde durchtränkt und imprägniert. Dabei ist es bevorzugt, daß die Flächengebilde so angeordnet sind, daß die Schichten A nach außen zu liegen kommen und so die Oberfläche des Halbzeugs bilden. Dadurch wird die Oberfläche des aus dem Halbzeug hergestellten Fertigteils infolge der etwas matrixreicheren Außenseiten des Halbzeugs glatter.

Die erfindungsgemäßen Halbzeuge können nach üblichen Preß- und Stanzverfahren bei Temperaturen oberhalb des Erweichungspunktes der thermoplastischen Polymeren zu Fertigteilen, insbesondere für den Automobil- und Maschinenbau verarbeitet werden.

Beispiel 1

Auf eine UD-Faserschar von 1500 mm Breite mit einem Flächengewicht von 150 g/m$^2$ werden Endlosfäden mit einem Flächengewicht von 150 g/m$^2$ wirr abgelegt, darüber wiederum eine UD-Faserschar von ebenfalls 150 g/m$^2$ und darauf nochmals endlos wirrverlegte Fäden. Dieses Gebilde wird in einem Nadelstuhl mit Filznadeln in bekannter Weise mit 50 Einstichen pro cm$^2$ zu einer Matte mit einem Flächengewicht von 600 g/m$^2$ verbunden. Zwei dieser Matten werden dann zwischen drei Schmelzschichten aus Polypropylen in der Heizzone einer Doppelbandpresse unter Druck getränkt und anschließend unter Beibehaltung eines geringeren Druckes abgekühlt. Das Halbzeug ist 2,5 mm dick und hat einen Glasgehalt von 40 Gew.%.

Beispiel 2

Auf eine UD-Faserschar von 1500 mm Breite mit einem Flächengewicht von 150 g/m$^2$ werden Endlosfäden mit einem Flächengewicht von 75 g/m$^2$ abgelegt, darüber eine UD-Lage von 150 g/m$^2$ und darauf eine Schicht von 75 g/m$^2$ aus Schnittglas von 50 - 100 mm Faserlänge. Dieses Gebilde wird mit einer Einstichzahl von 25 cm$^{-2}$ vernadelt und als Matte aufgerollt. Zwei solcher Matten werden mit einer Einstichzahl von 25 cm$^{-2}$ zusammengenadelt. Die so erhaltene Matte von 900 g/m$^2$ wird ebenfalls mit Polypropylen getränkt und ergibt ein Halbzeug von 3,2 mm Dicke bei einem Glasgehalt von 45 Gew.%, wobei der UD-Anteil 2/3 des Gesamtglasgehaltes stellt.

**Patentansprüche**

1. Faserverstärktes, thermoplastisch verformbares Halbzeug, enthaltend 80 bis 40 Gew.-% eines thermoplastischen Polymeren und 20 bis 60 Gew.-% eines durch Nadelung fixierten textilen Flächengebildes, dadurch gekennzeichnet, daß das textile Flächengebilde besteht aus:
mindestens zwei Schichten A aus in mindestens einer Vorzugsrichtung orientierten Endlosglasfasern mit einem Flächengewicht von jeweils maximal 300 g/m$^2$, und
mindestens einer Schicht B aus nicht orientierten Glasfasern,
wobei das Gewichtsverhältnis der Faserschichten A : B 80 : 20 bis 40 : 60 beträgt.

2. Faserverstärktes Halbzeug nach Anspruch 1, dadurch gekennzeichnet, daß das textile Flächengebilde den Schichtaufbau ABAB, ABABAB oder ABABABAB hat.

3. Faserverstärktes Halbzeug, dadurch gekennzeichnet, daß es zwei textile Flächengebilde nach Anspruch 2 enthält, die so angeordnet sind, daß die Oberfläche des Halbzeugs von Schichten A gebildet wird.

**Claims**

1. A fiber reinforced, thermoplastically formable semifinished product comprising from 80 to 40% by weight of a thermaplastic polymer and from 20 to 60% by weight of a needled textile sheet material, wherein the textile sheet material comprises:
at least two layers A of continuous glass fibers oriented in at least one direction, each having a basis weight of not more than 300 g/m$^2$, and
at least one layer B of nonoriented glass fibers, the weight ratio of the fiber layers A:B being from 80:20 to 40:60.

2. A fiber reinforced semifinished product as claimed in claim 1, wherein the textile sheet material has the layer arrangement ABAB, ABABAB or ABABABAB.

3. A fiber reinforced semifinished product comprising two textile sheet materials as set forth in claim 2 arranged in such a way that the surface of the semifinished product is formed by layers A.

**Revendications**

1. Produit semi-fini déformable thermoplastiquement, renforcé par des fibres, contenant 80 à 40% en poids d'un polymère thermoplastique et 20 à 40% en poids d'un produit textile en nappe fixé par aiguilletage, caractérisé en ce que le produit textile en nappe se compose
d'au moins deux couches A en fibres de verre sans fin, orientées dans au moins une direction préférentielle, ayant chacune un poids par unité de surface de 300 g/m$^2$ au maximum, et
d'au moins une couche B en fibres de verre non orientées,
le rapport de poids des couches de libres A:B étant compris entre 80:20 et 40:60.

2. Produit semi-fini renforcé par des fibres selon la revendication 1, caractérisé en ce que le produit textile en nappe a la structure stratifiée ABAB, ABABAB ou ABABABAB.

3. Produit semi-fini renforcé par des fibres, caractérisé en ce qu'il contient deux produits textiles en nappe selon la revendication 2, disposés de telle manière que la surface du produit semi-fini soit constituée par des couches A.